(19) **Europäisches Patentamt**
**European Patent Office**
**Office européen des brevets**

(11) **EP 1 290 421 B1**

(12) **FASCICULE DE BREVET EUROPEEN**

(45) Date de publication et mention de la délivrance du brevet:
**02.12.2009 Bulletin 2009/49**

(21) Numéro de dépôt: **01962688.6**

(22) Date de dépôt: **25.05.2001**

(51) Int Cl.:
***G01M 17/02*** *(2006.01)*

(86) Numéro de dépôt international:
**PCT/EP2001/005999**

(87) Numéro de publication internationale:
**WO 2001/090714 (29.11.2001 Gazette 2001/48)**

(54) **MODE DE DETERMINATION DE COMPOSANTES D'EFFORTS SUBIS PAR UN PNEUMATIQUE**

VERFAHREN ZUR BESTIMMUNG DER AUF EINEN REIFEN EINWIRKENDEN KRAFTKOMPONENTEN

METHOD FOR DETERMINING FORCE COMPONENTS ACTING ON A TYRE

(84) Etats contractants désignés:
**AT BE CH CY DE DK ES FI FR GB GR IE IT LI LU MC NL PT SE TR**

(30) Priorité: **26.05.2000 FR 0007079**

(43) Date de publication de la demande:
**12.03.2003 Bulletin 2003/11**

(73) Titulaires:
• **Société de Technologie Michelin**
 **63000 Clermont-Ferrand Cedex 09 (FR)**
• **Michelin Recherche et Technique S.A.**
 **1763 Granges-Paccot (CH)**

(72) Inventeur: **POULBOT, Valéry**
 **F-63430 Les Martres d'Artière (FR)**

(74) Mandataire: **Bauvir, Jacques**
 **Michelin & Cie**
 **Service SGD/LG/PI**
 **C.E.R. Ladoux - F35**
 **63040 Clermont-Ferrand Cedex 09 (FR)**

(56) Documents cités:
**WO-A-01/19656      DE-A- 19 608 528**
**US-A- 5 913 240**

**Description**

La présente invention concerne les véhicules, la liaison au sol et la mesure des efforts exercés par la chaussée sur les pneumatiques des véhicules.

La présente invention concerne aussi les divers dispositifs d'assistance électronique utilisés par exemple pour la régulation antiblocage des freins d'un véhicule ou la régulation anti-patinage des roues motrices, le contrôle de trajectoire d'un véhicule ou encore pour d'autres formes de contrôle ou de surveillance comme la pression des pneumatiques.

Afin de contrôler le comportement d'un véhicule, on a cherché à déterminer certains paramètres de roulage. Ainsi, pour réduire le glissement longitudinal des roues, on a développé des systèmes de limitation du glissement (A.B.S, A.S.R) capables de moduler le couple transmis à la roue par le moteur ou le frein en fonction du glissement déduit des variations de vitesse de rotation de chaque roue. On a aussi proposé de mesurer la torsion (déformation angulaire circonférentielle) des flancs d'un pneumatique pour déterminer les variations du couple transmis à la chaussée. Cette mesure, plus directe qu'une déduction à partir de la variation de la vitesse de rotation, peut permettre une régulation plus fine des systèmes de limitation du glissement.

On connaît aussi des systèmes (comme l'E.S.P) qui agissent sur les freins ou sur la puissance motrice appliquée aux roues pour assurer que la trajectoire souhaitée par le conducteur est bien suivie par le véhicule. Pour ce faire, on mesure généralement simultanément la vitesse de lacet (vitesse de rotation du véhicule autour d'un axe vertical), la vitesse de roulage, l'accélération transversale du véhicule et la position angulaire que le conducteur impose au volant.

L'invention part de l'observation que toutes les forces exercées par la chaussée sur le véhicule sont transmises par l'intermédiaire des roues. C'est le bilan de ces forces qui conditionne les accélérations subies par le véhicule. Ainsi, la détermination de l'ensemble de ces forces pourrait permettre de se passer des différents capteurs cités plus haut. Pour ce faire, les méthodes connues (voir plus haut) peuvent permettre de connaître les efforts longitudinaux. Les efforts verticaux peuvent également être mesurés de diverses manières connues. Pour la détermination complète du bilan des forces exercées par la chaussée sur le véhicule seuls les efforts transversaux restent à connaître. C'est l'objectif de l'invention que de les déterminer de façon simple et fiable.

La méthode de l'invention est basée sur la constatation expérimentale du fait que les efforts transversaux agissant entre la bande de roulement du pneumatique et la chaussée provoquent une déformation sensible et reproductible sous la forme d'une torsion circonférentielle des flancs des pneumatiques. Cette déformation angulaire circonférentielle, si l'on parvient à la mesurer isolément en temps réel, peut permettre de connaître à chaque instant le sens et l'intensité des efforts transversaux agissant sur le pneumatique.

L'invention concerne une méthode de détermination d'une composante transversale d'une résultante d'efforts exercés par la chaussée sur une aire de contact d'un pneumatique, ladite méthode étant **caractérisée en ce que** ladite composante transversale est déduite d'au moins une mesure de déformation angulaire circonférentielle dans au moins un premier flanc du pneumatique en un premier point fixe dans l'espace, situé à un azimut, le long de la circonférence du pneumatique, différent de l'azimut du centre de ladite aire de contact et différent de l'azimut du point opposé audit centre de l'aire de contact.

L'invention concerne également une telle méthode **caractérisée en ce que** l'on effectue une telle mesure respectivement dans chaque flanc pour obtenir une première mesure et une deuxième mesure et l'on déduit ladite composante transversale de la différence entre lesdites première et deuxième mesure.

La méthode de l'invention permet également de déduire de la mesure de la torsion des flancs des pneumatiques les autres (ou l'une des autres) composantes de la résultante des efforts exercés sur l'aire de contact, c'est-à-dire non seulement les efforts transversaux (dits "en y") mais aussi les efforts longitudinaux (dits "en x") et les efforts verticaux (dits "en z"), tels qu'ils s'exercent entre le pneumatique et la chaussée.

L'invention concerne donc également une méthode telle que décrite plus haut et **caractérisée en ce que** l'on effectue, en outre, une telle mesure dans ledit premier flanc en un deuxième point fixe dans l'espace, distinct du premier point, situé à un azimut sensiblement opposé du premier point pour obtenir une troisième mesure et que l'on déduit, en outre, une composante longitudinale de ladite résultante d'efforts exercés par la chaussée de la somme desdites première et troisième mesure.

De manière préférée, l'invention concerne une telle méthode **caractérisée en ce que** l'on déduit en outre, une composante verticale d'une résultante d'efforts exercés par la chaussée de la différence entre lesdites troisième et première mesure et d'une contribution de ladite composante transversale.

Ces différentes composantes participent de façon différente mais simultanée aux déformations du pneumatique et en particulier au déplacement tangentiel du sommet (ou bande de roulement) par rapport à la zone d'accrochage (ou talon) sur la jante. Cette déformation angulaire circonférentielle (ou·torsion des flancs), plus ou moins homogène le long de la circonférence du pneumatique, est matérialisée par la déflection des renforts de carcasse dans le cas de pneumatiques à carcasse radiale. On parle couramment de "déradialisation". La méthode de l'invention ne s'applique cependant pas uniquement aux pneumatiques à carcasse radiale, mais le comportement de renforts radiaux, c'est-à-dire sensiblement parallèles aux rayons du pneumatique, permet une illustration "pratique".

Les fondements et principes de l'invention seront mieux compris à l'aide des figures suivantes:

Figure 1: schéma d'un pneumatique soumis à un effort vertical Fz dans son aire de contact.
Figure 2: schéma d'un pneumatique soumis à un effort longitudinal Fx dans son aire de contact.
Figures 3a,b: schéma d'un pneumatique soumis à un effort transversal Fy dans son aire de contact.
Figure 4: graphe schématique de la déformation angulaire circonférentielle provoquée par chaque type d'effort en fonction de l'azimut.
Figure 5: graphe comparatif de la composante transversale des efforts subis par le pneumatique et de la composante transversale des efforts déduite de la déformation angulaire circonférentielle mesurée sur le pneumatique par la méthode de l'invention.

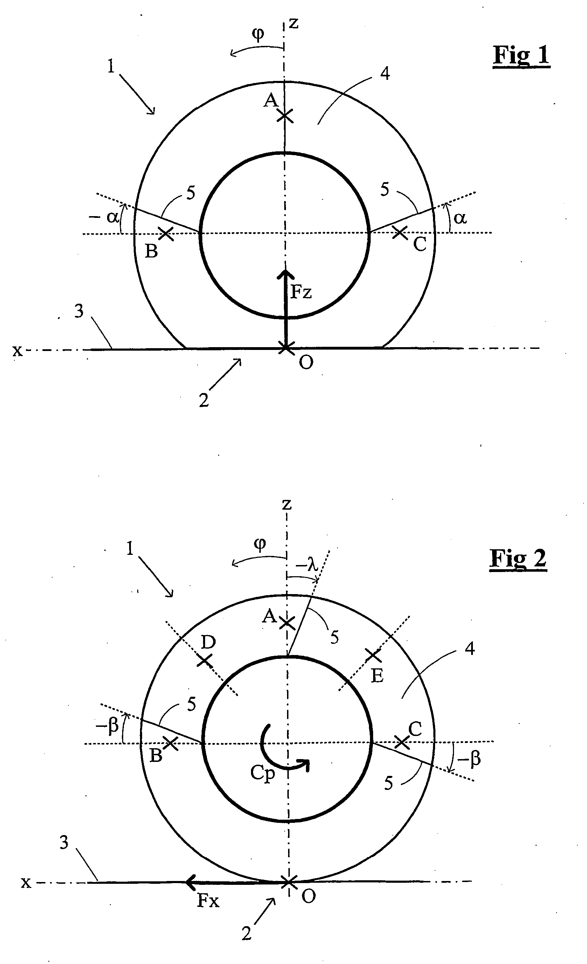

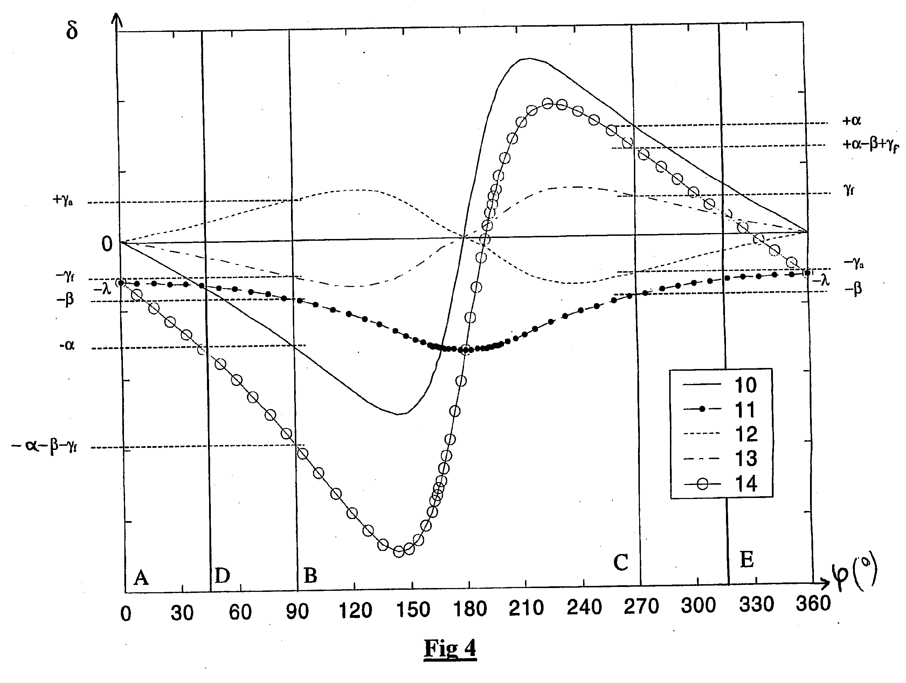

La figure 1 montre schématiquement la déformation des flancs d'un pneumatique sous l'unique effet d'un effort vertical Fz transmis par la chaussée. Le pneumatique (1) se déforme pour constituer son aire de contact (2) sur la chaussée (3). Cette déformation provoque un déplacement de certaines parties de la bande de roulement par rapport aux parties du talon qui leur font face lorsque le pneumatique ne subit aucune déformation. Ces déplacements sont facilement visualisés si l'on représente la modification (amplifiée sur la figure) de l'orientation dans un flanc (4) des renforts de carcasse (5) d'un pneumatique à carcasse radiale. Naturellement, le principe de l'invention ne s'applique pas uniquement aux pneumatiques radiaux mais cette représentation est avantageuse pour la clarté de l'exposé. Ainsi, on constate (voir également figure 4), sous un effort vertical Fz, une déformation angulaire symétrique (par rapport à un axe vertical) des renforts radiaux (5) du flanc (4). Si l'on se repère sur la circonférence du pneumatique en fonction d'un azimut φ (nul au sommet du pneumatique, ici le point A), la déformation angulaire δ1 a une valeur - α au point B (φ = + 90°) et une valeur opposée +α au point C (φ = +270° ou -90°). Au point A (φ = 0°), la déformation angulaire δ1 est nulle. Bien sûr, la valeur de α varie, pour un type de pneumatique donné, en fonction de l'intensité de l'effort vertical Fz mais également en fonction de la pression interne P. Les déformations constatées sont équivalentes sur chaque flanc du pneumatique.

| Point considéré | A | B | C |
|---|---|---|---|
| Azimut φ | 0° | + 90° | + 270° |
| Déformation angulaire δ1 | 0° | - α | + α |

La figure 2 montre schématiquement la déformation des flancs d'un pneumatique sous l'unique effet d'un effort longitudinal Fx transmis par la chaussée. Cette représentation est simplificatrice dans la mesure ou sans charge, c'est-à-dire sans effort Fz, un pneumatique ne peut pas subir d'effort dans le plan du sol mais cela permet de représenter isolément les différents éléments de la déformation des flancs du pneumatique. Cet effort Fx a généralement pour origine un couple Cp appliqué à la roue par le moteur ou les freins du véhicule. Le pneumatique (1) subit alors une torsion de même sens mais d'intensité variable tout le long de sa circonférence. Selon le même type de représentation qu'à la figure 1, on constate (voir également figure 4), sous un effort longitudinal Fx, une variation angulaire δ2 égale à -β pour les points B et C et -λ pour le point A. L'angle λ est inférieur à β et ces deux angles sont liés entre eux par une fonction de transfert propre aux caractéristiques du pneumatique. L'angle β (ainsi que λ) varie, pour un type de pneumatique donné, en fonction de l'effort longitudinal Fx et de la pression interne P. Les déformations constatées sont équivalentes sur chaque flanc du pneumatique.

| Point considéré | A | B | C |
|---|---|---|---|
| Azimut φ | 0° | + 90° | + 270° |
| Déformation angulaire δ2 | - λ | - β | - β |

Les principes et comportements décrits dans les figures 1 et 2 sont connus et font partie de l'état de la technique.

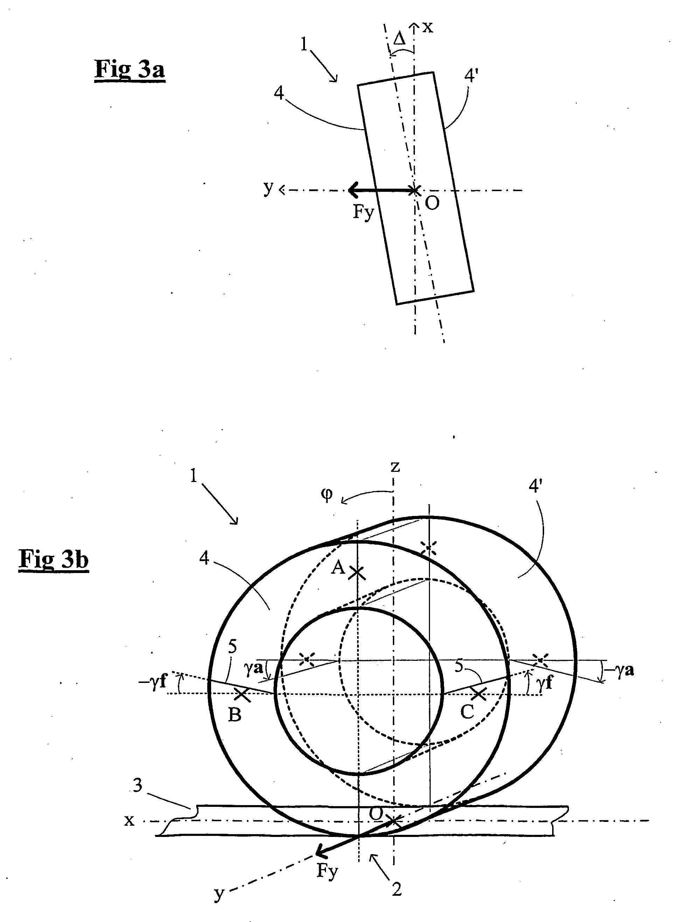

La figure 3a montre un schéma, en vue de dessus, du fonctionnement transversal du pneumatique (1), appelé aussi "fonctionnement en dérive". Le plan de roue forme un angle de dérive Δ avec sa trajectoire (selon Ox). On peut définir les flancs (4, 4') par rapport au sens de dérive. Pour qu'un effort transversal Fy soit transmis au pneumatique dans le sens représenté sur la figure 3a, le pneumatique doit présenter un angle de dérive positif (par exemple, virage à gauche pour un pneumatique roulant vers le haut de la figure). Dans cette configuration, le flanc (4) (intérieur au virage) est le flanc de fuite et le flanc opposé (4') (extérieur au virage) est le flanc d'attaque.

La figure 3b montre schématiquement la déformation des flancs du pneumatique (1) de la figure 3a sous l'unique effet de cet effort transversal Fy transmis par la chaussée. Cet effort Fy a pour origine une accélération transversale, par exemple lors d'une trajectoire courbe suivie par le véhicule. Comme précédemment, cette représentation est simplificatrice dans la mesure où, sans charge c'est-à-dire sans effort Fz, un pneumatique ne peut pas subir d'effort dans le plan du sol mais cela permet de représenter isolément les différents éléments de la déformation des flancs du pneumatique. On a constaté (voir également figure 4) qu'un effort transversal Fy exercé sur l'aire de contact occasionne, sur chaque flanc, une signature sensiblement symétrique (par rapport à un axe vertical médian du pneumatique) en terme de variation de l'orientation de renforts radiaux (5). Cette signature est différente d'un flanc (4) à l'autre flanc (4'). Avec ces conventions, sur le flanc d'attaque (4'), la déformation angulaire $\delta 3a$ s'annule au point A ($\varphi = 0°$), vaut $+\gamma a$ aux points B ($\varphi = 90°$) et $-\gamma a$ au point C ($\varphi = + 270°$). Sur le flanc de fuite (4), la déformation angulaire $\delta 3f$ s'annule au point A ($\varphi = 0°$), vaut $-\gamma f$ au point B ($\varphi = + 90°$) et $+\gamma f$ au point C ($\varphi = + 270°$). Les angles $\gamma a$ et $\gamma f$ varient (pour un pneumatique donné) en fonction de l'effort transversal Fy et de la pression P.

On peut alors dresser le tableau suivant:

| Point considéré | A | B | C |
|---|---|---|---|
| Azimut $\varphi$ | 0° | + 90° | + 270° |
| Déformation angulaire $\delta 3$ a (flanc d'attaque) | 0° | + $\gamma a$ | - $\gamma a$ |
| Déformation angulaire $\delta 3f$ (flanc de fuite) | 0° | - $\gamma f$ | + $\gamma f$ |

La figure 4 représente schématiquement, en fonction de l'azimut $\varphi$ considéré le long de la circonférence du pneumatique, un exemple des variations constatées de la déformation angulaire circonférentielle occasionnée par chaque type d'effort subi par le pneumatique. Cet exemple est le cas d'un pneumatique tourisme radial de dimension moyenne, soumis à une pression interne de 2.1 Bar. Un exemple différent fournirait naturellement des valeurs différentes mais des profils de courbes similaires. La courbe 10 représente la variation de $\delta 1$, c'est à dire de l'effet d'un effort vertical Fz positif (voir figure 1) d'une intensité de 400 daN. La courbe 11 représente la variation de $\delta 2$, c'est à dire de l'effet d'un effort longitudinal Fx positif (voir figure 2) d'une intensité de 100 daN. La courbe 12 représente la variation de $\delta 3a$, c'est à dire de l'effet sur le flanc d'attaque (4') d'un effort transversal Fy positif (voir figure 3b) occasionné par un angle de dérive $\Delta$ positif de 1 degré. La courbe 13 représente la variation de $\delta 3f$, c'est à dire de l'effet du même effort transversal positif Fy mais mesurée sur le flanc de fuite (4). La courbe 14 représente la somme $\delta 1 + \delta 2 + \delta 3f$ Aux points A ($\varphi = 0°$), B ($\varphi = +90°$) et C ($\varphi = + 270°$), on retrouve, sur les différentes courbes, les valeurs des tableaux précédents.

En réalité, un pneumatique subit simultanément les effets (que l'on a présentés isolement jusqu'ici) des efforts Fx, Fy, Fz . Ces efforts représentent les composantes (dans un repère Oxyz lié à l'aire de contact) de la résultante des efforts transmis par la chaussée au pneumatique à travers l'aire de contact. Le comportement réel du pneumatique, en particulier la déformation angulaire circonférentielle qu'il présente est donc une combinaison variable des trois comportements délibérément dissociés dans le modèle des figures 1 à 3b. On a constaté que ces 3 comportements de base se superposent et que les différentes déformations angulaires ($\delta 1$, $\delta 2$, $\delta 3a,f$) s'additionnent dans une large mesure. Ainsi, si l'on prend l'exemple de la figure 4 et que l'on mesure la déformation angulaire circonférentielle $\delta f$ du flanc de fuite (4 sur la figure 3b) en fonction de l'azimut $\varphi$ dans le cas où le pneumatique subit simultanément les trois composantes Fx, Fy, Fz , on obtient sensiblement la courbe 14 formée par la somme des courbes de $\delta 1$ (10), $\delta 2$ (11) et $\delta 3f$(13). Cette constatation expérimentale de la quasi-superposition des contributions de chaque composante ouvre de nombreuses possibilités en matière de mesure.

On peut combiner les tableaux précédents en considérant que la déformation angulaire circonférentielle $\delta$ est en chaque point (A, B, C) et sur chaque flanc (4, 4') la somme des déformations angulaires liées à chaque composante (Fx, Fy, Fz).

On obtient alors le tableau suivant:

| Point considéré | A | B | C |
|---|---|---|---|
| Azimut $\varphi$ | 0° | + 90° | + 270° |
| Déformation angulaire $\delta 1$ (Fz) | 0° | - $\alpha$ | + $\alpha$ |
| Déformation angulaire $\delta 2$ (Fx) | -$\lambda$ | - $\beta$ | - $\beta$ |
| Déformation angulaire $\delta 3a$ (Fy) (flanc d'attaque) | 0° | + $\gamma a$ | - $\gamma a$ |
| Déformation angulaire $\delta 3f$ (Fy) (flanc de fuite) | 0° | - $\gamma f$ | + $\gamma f$ |

(suite)

| Point considéré | A | B | C |
|---|---|---|---|
| Déformation angulaire δa (Fx, Fy, Fz) (flanc d'attaque) δa = δ1 + δ2 + δ3a | -λ | -α-β+γa | +α-β-γa |
| Déformation angulaire δf (Fx, Fy, Fz) (flanc de fuite) δf = δ1 + δ2 + δ3f | -λ | -α-β-γf | +α-β+γf |

De ce tableau, il ressort que, suivant en quel points (A, B, C) et sur quel flanc (attaque ou fuite) on procède à la mesure de la déformation angulaire δ, on peut dans certaines conditions déduire de différentes équations les valeurs soit de chaque contribution (α, β, γa, γf) pour ces points soit de combinaisons exploitables de ces contributions. Ceci peut permettre de déterminer les composantes Fx, Fy, Fz.

Exemple 1:

On veut déterminer la composante tranversale Fy de la résultante des efforts subis par le pneumatique dans son aire de contact. Cette composante apporte les contributions δ3a ou δ3f (selon le flanc considéré) à la déformation angulaire circonférentielle δ mesurée. En mesurant, par exemple au point B, la déformation angulaire circonférentielle δa(B) sur le flan d'attaque (4') et la déformation angulaire circonférentielle δf(B) sur le flan de fuite (4) et en calculant la différence δa(B) - δf(B), on obtient d'après le tableau, l'égalité suivante:

$$\delta a(B) - \delta f(B) = (-\alpha - \beta + \gamma a) - (-\alpha - \beta - \gamma f) = \gamma a + \gamma f$$

Cette quantité (γa + γf) est bien représentative de la contribution de Fy (voir plus haut). Ce qui signifie que la mesure δa(B) - δf(B) permet de déterminer Fy. On a de plus constaté que la fonction de transfert liant Fy à ( γa + γf ) est proche d'une forme très simple (premier degré), ce qui est avantageux en terme de précision. Il est à noter que cette méthode de détermination de Fy est totalement indépendante des autres composantes (Fx et Fz) car leurs contributions (α, β) sont éliminées lors du calcul par différence. Cette méthode permet donc de déterminer Fy par la mesure de la déformation angulaire circonférentielle δ en un seul point, de part et d'autre d'un pneumatique. Ce point peut être situé n'importe où le long de la circonférence du pneumatique, sauf au centre de l'aire de contact et à son opposé (point A sur les figures) car ces points ne voient pas de contribution de Fy (voir figures et tableaux).

Exemple 2:

On veut déterminer la composante transversale Fy de la résultante des efforts subis par le pneumatique dans son aire de contact. Cette composante apporte les contributions δ3a ou δ3f (selon le flanc considéré) à la déformation angulaire circonférentielle δ mesurée. En mesurant, au point B la déformation angulaire circonférentielle δf(B) sur le flan de fuite (4) et au point C la déformation angulaire circonférentielle δf(C) sur le flan de fuite (4) et en calculant la différence δf(C) - δf(B), on obtient d'après le tableau, l'égalité suivante:

$$\delta f(C) - \delta f(B) = (+\alpha - \beta + \gamma f) - (-\alpha - \beta - \gamma f) = 2\alpha + 2\gamma f$$

Cette quantité (2 α + 2 γf) est représentative de la somme des contributions de Fy et de Fz (voir plus haut). Ce qui signifie que la mesure δf(C) - δf(B) permet de déterminer Fy si l'on connaît par ailleurs Fz (donc α) ou vice-versa. Cette méthode peut donc permettre de déterminer Fy par la mesure de la déformation angulaire circonférentielle δ en deux points sur le même flanc (intérieur ou extérieur). Ces points peuvent être situés n'importe où le long de la circonférence du pneumatique, sauf au centre de l'aire de contact et à son opposé (point A sur les figures) car ces points ne voient pas de contribution de Fy (voir figures et tableaux). Naturellement, une mesure en deux points différents situés sur des flancs différents permet une détermination similaire, par exemple:

$$\delta f(C) - \delta a(B) = (+\alpha - \beta + \gamma f) - (-\alpha - \beta + \gamma a) = 2\alpha + \gamma f - \gamma a$$

Le choix des azimuts de mesure (position angulaire des points B et C) peut se faire en fonction des moyens mis en oeuvre pour la mesure de la déformation angulaire circonférentielle. La connaissance nécessaire de Fz, donc de $\alpha$, peut venir d'une mesure quelconque de la charge portée par le pneumatique, effectuée par exemple au sein de la liaison au sol du véhicule.

Exemple 3:

La méthode de l'exemple 2 peut être mise en oeuvre dans le but inverse où l'on cherche à déterminer Fz (c'est-à-dire $\alpha$ ) connaissant Fy (ou $\gamma a$ et/ou $\gamma f$). Par exemple, en calculant la différence $\delta f(C) - \delta f(B)$, on a l'égalité suivante:

$$\delta f(C) - \delta f(B) = (+\alpha - \beta + \gamma f) - (-\alpha - \beta - \gamma f) = 2\,\alpha + 2\,\gamma f$$

c'est-à-dire:

$$\alpha = 1/2\,[\delta f(C) - \delta f(B)] - \gamma f$$

Exemple 4:

On veut déterminer la composante transversale Fy de la résultante des efforts subis par le pneumatique dans son aire de contact. Cette composante apporte les contributions $\delta 3a$ ou $\delta 3f$ (selon le flanc considéré) à la déformation angulaire circonférentielle $\delta$ mesurée. En mesurant, au point B la déformation angulaire circonférentielle $\delta f(B)$ sur le flan de fuite (4), on a d'après le tableau, l'égalité suivante:

$$\delta f(B) = -\alpha - \beta - \gamma f$$

Ceci signifie que la mesure $\delta f(B)$ permet de déterminer Fy si l'on connaît par ailleurs $\alpha$ et $\beta$:

$$\gamma f = -\alpha - \beta - \delta f(B)$$

La composante Fy est alors déterminé par une fonction de transfert la liant à $\gamma f$.

Exemple 5:

On veut déterminer la composante longitudinale Fx de la résultante des efforts subis par le pneumatique dans son aire de contact en fonction de la déformation angulaire circonférentielle $\delta$ mesurée. En mesurant, sur le flanc de fuite (4), la déformation angulaire circonférentielle $\delta f(B)$ au point B et $\delta f(C)$ au point C et en calculant la somme $\delta f(B) + \delta f(C)$, on obtient d'après le tableau, l'égalité suivante:

$$\delta f(B) + \delta f(C) = (-\alpha - \beta - \gamma f) + (+\alpha - \beta + \gamma f) = -2\,\beta$$

Cette quantité ( $-2\beta$ ) est bien représentative de la contribution de Fx (voir plus haut). Ce qui signifie que la somme des mesures $\delta f(B) + \delta f(C)$ permet de déterminer Fx. Il est à noter que cette méthode de détermination de Fx est totalement indépendante des autres composantes (Fy et Fz) car leurs contributions ($\alpha$, $\gamma$) sont éliminées lors du calcul.

Exemple 6:

On peut également déterminer la composante longitudinale Fx par une mesure unique au point A (flanc intérieur ou extérieur) car la déformation angulaire circonférentielle $\delta a, f(A)$ est égale à $-\lambda$ (voir tableaux), $\lambda$ étant lié à $\beta$ et Fx.

Exemple 7:

On veut déterminer les composantes Fx et Fy par la mesure de la déformation angulaire circonférentielle δ, connaissant par ailleurs Fz (donc α). Une façon de procéder est de déterminer Fx par la méthode de l'exemple 6 (voir plus haut) et de déterminer Fy par la méthode de l'exemple 4 (voir plus haut). Ainsi, par la mesure en deux points du pneumatique, par exemple aux point A et au point B sur un seul et même flanc, la méthode de l'invention permet la détermination des deux composantes Fx, Fy lorsque l'on connaît Fz (donc α) par une méthode quelconque.

Exemple 8:

On veut déterminer, par la mesure de la déformation angulaire circonférentielle δ, les trois composantes Fx, Fy et Fz. Une façon de procéder est de déterminer Fy par la méthode de l'exemple 1 (voir plus haut), de déterminer Fx par la méthode de l'exemple 5 (voir plus haut) et de déterminer Fz par la méthode de l'exemple 3 (γf étant connu si Fy est connu, voir plus haut). Ainsi, par la mesure en trois points du pneumatique, par exemple au point B sur chaque flanc et au point C sur un seul flanc, la méthode de l'invention permet la détermination des trois composantes Fx, Fy et Fz.

Les exemples 1 à 8 ne constituent aucunement une liste limitative des possibilités de mise en oeuvre de la méthode de l'invention. Au contraire, l'homme du métier sait définir (par exemple, à partir des tableaux précédents) un grand nombre de variantes, d'alternatives ou de combinaisons différentes de ces quelques exemples en fonction, par exemple, des moyens de mesure qu'il entend utiliser ou des mesures dont il dispose par ailleurs car elle sont fournies par d'autres dispositifs implantés sur le véhicule.

La détermination nécessaire des fonctions de transferts liant chaque contribution ($\alpha$, $\beta$, $\lambda$, $\gamma a$, $\gamma f$) entre elles ou à chaque composante (Fz, Fx, Fy) en fonction des positions choisies pour les points de mesure (A, B, C) peut se faire par des méthodes expérimentales ou par le calcul numérique. Le cas des deux fonctions de transferts liant Fy à $\gamma a$ et $\gamma f$ est particulier du fait que selon le sens de l'angle de dérive $\Delta$, un flanc déterminé sera soit le flanc de fuite soit le flanc d'attaque. Cependant, pour un azimut donné ($\varphi$), le signe de la contribution ($\delta 3a,f$) que l'on détermine permet de lever cette ambiguïté (voir figure 4). Ces fonctions de transfert sont conditionnées par différentes variables liées au type de pneumatique et dans une certaine mesure par la pression interne du pneumatique. Si l'on veut tenir compte de la variabilité de la pression dans le temps, on peut utiliser l'information d'un indicateur de pression indépendant. Inversement, on peut connaître, grâce à un capteur, la charge Fz portée par la roue et calculer, à partir de la valeur de la contribution $\alpha$ déterminée d'après les mesures de la déformation angulaire circonférentielle $\delta$, la pression interne P.

Le choix de la position des points (A, B, C) est, dans le principe, libre car n'importe quelle combinaison de trois points distincts de la circonférence du pneumatique permet un calcul similaire. Cependant, la position du point A présentée dans les schémas correspond à un mode préféré de réalisation de l'invention car il autorise en particulier la détermination directe de la contribution ($\lambda$ ou $\beta$) issue de l'effort longitudinal (Fx). De même un positionnement symétrique des points B et C (donc des azimuts opposés) permet des équations relativement simples comme on l'a vu dans certains exemples. Les azimuts choisis de +90° et +270° (c'est à dire -90°) sont cités ici à titre d'exemple car ils facilitent l'exposé de l'invention. En fait, plus les points B et C sont proches de l'aire de contact, plus la variation angulaire mesurée sera forte (donc la précision de mesure potentiellement supérieure), mais plus l'implantation de certains moyens de mesure sera limitée par la proximité de la chaussée. Un mode préféré de réalisation de l'invention correspond au cas représenté où l'azimut ($\varphi$) du premier point (B) est sensiblement égal à + 90°. Les seules positions strictement impossibles pour les points B et C, sont évidemment les points correspondant au centre de l'aire de contact et à son opposé (point A dans les figures) puisque ces deux points de la circonférence du pneumatique ne voient pas d'effet des composantes Fz et Fy en terme de déformation angulaire circonférentielle.

Un autre mode de réalisation de l'invention particulièrement intéressant consiste à effectuer les mesures en trois points (C, D, E sur la figure 2) dont les azimuts respectifs sont environ +270° (c'est à dire -90°), +45°, et + 315° (c'est à dire -45°). Cette seconde configuration préférée permet en particulier une détermination précise de toutes les composantes Fx, Fy et Fz par la mesure en trois points sur un flanc unique. L'utilisation des points B, D et E présente, par symétrie, les mêmes avantages. Les positions décrites ici pour les points D et E sont des exemples non limitatifs car on comprend bien que, tout comme précédemment pour les points B et C, une grande latitude est possible. La différence avec les configurations décrites plus haut réside dans le fait que l'on ne mesure pas au point A. Ceci complique les équations théoriques car l'on n'obtient plus $\lambda$ indépendamment mais en revanche, tous les points de mesure voient une contribution de chaque composante Fx, Fy et Fz. Ceci est un avantage pour la précision dans le cas ou ces trois composantes sont recherchées.

Une autre configuration de mesure préférée est celle constituée par les points A, C, E (ou A, B, D par symétrie). Cette configuration est particulièrement avantageuse pour la précision de la détermination de la composante transversale Fy.

Alternativement, on peut rechercher directement les fonctions donnant les composantes Fx, Fy et Fz en fonction des mesures de déformation angulaire circonférentielle d'un pneumatique en des azimuts connus du ou des flancs de ce pneumatique. Cette détermination directe des fonctions donnant les efforts ne tient pas compte de chacune de leurs contributions individuelles à la déformation angulaire circonférentielle mais uniquement du résultat global. La détermination des fonctions de transfert n'est plus nécessairement basée sur l'analyse de la mécanique du pneumatique mais sur la réponse du pneumatique en terme de déformation angulaire circonférentielle aux efforts qu'il subit. De ce fait, les éventuels couplages entres les différentes contributions sont sans conséquence sur la précision de la détermination des fonctions. On opère de la manière suivante :

- ■ on considère un nombre au moins égal à trois de points de mesure situés en des positions données le long de la circonférence du pneumatique (par exemple les points C, D, E de la figure 2),
- ■ on fait l'hypothèse que chaque composante des efforts Fx, Fy et Fz est une fonction polynomiale de degré n de la déformation angulaire circonférentielle (δC, δD, δE) mesurable aux différents points de mesures (C, D, E), (par exemple pour n=3, cette hypothèse conduit aux équations suivantes :

$$Fx = \sum_{\substack{i,j,k=0 \\ i+j+k \leq 3}}^{3} a_{ijk}\delta C^i \delta D^j \delta E^k \;, \qquad Fy = \sum_{\substack{i,j,k=0 \\ i+j+k \leq 3}}^{3} b_{ijk}\delta C^i \delta D^j \delta E^k \;, \qquad Fz = \sum_{\substack{i,j,k=0 \\ i+j+k \leq 3}}^{3} c_{ijk}\delta C^i \delta D^j \delta E^k \; )$$

- ■ on détermine les coefficients ($a_{ijk}$, $b_{ijk}$, $c_{ijk}$) des fonctions polynomiales à partir d'un ensemble de données (Fx, Fy, Fz, δC, δD, δE) tirées de statistiques expérimentales ou obtenues par calculs numériques par exemple par la méthode des éléments finis.

De cette manière, on peut déterminer pour chaque type de pneumatique, les fonctions donnant directement les efforts Fx, Fy, Fz en fonction des déformations mesurables en ces mêmes points (par exemple C, D, E) lors de l'utilisation du pneumatique. Naturellement, on peut appliquer cette méthode partiellement pour ne déterminer par exemple que la composante Fy sans chercher à connaître ni Fx, ni Fz, ni leurs contributions en terme de torsion des flancs puisque l'on obtient directement l'expression de Fy en fonction des mesures aux différents points. Bien sûr, on peut déterminer les coefficients des fonctions de transfert pour toute configuration de mesure, cette méthode n'étant pas limitée à la configuration (C, D, E) choisie pour l'illustrer. Il convient seulement d'utiliser une configuration identique lors de la détermination des coefficients puis lors de la mise en oeuvre ultérieure de la méthode de mesure. On peut également utiliser des configurations différentes (symétriques par exemple) et déduire les coefficients finaux (ceux qui serviront pour la mise en oeuvre de la méthode de l'invention) à partir des coefficients déterminés car ils sont liés par une relation connue.

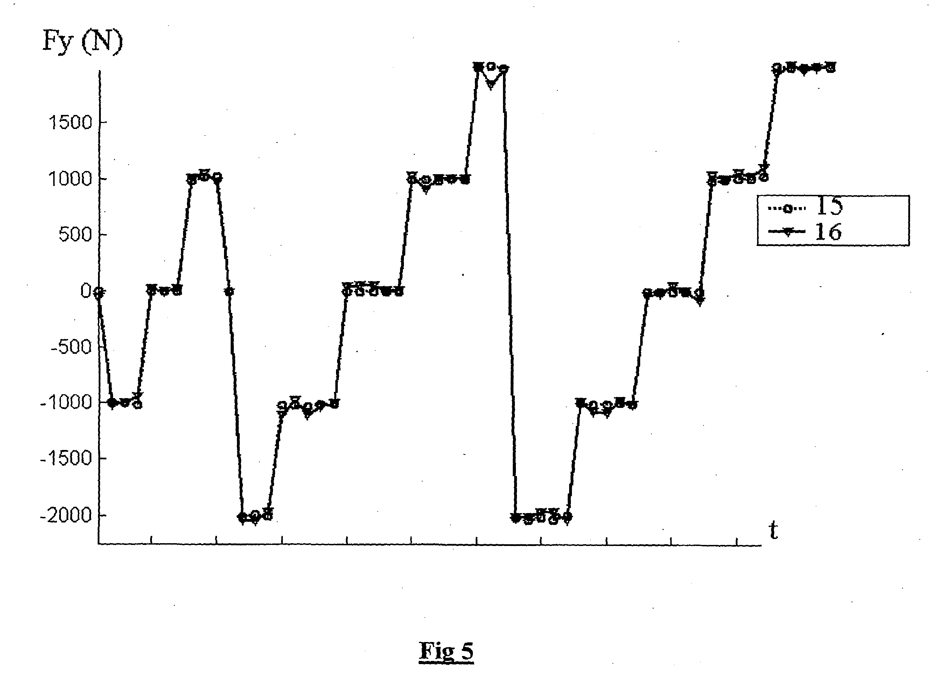

La figure 5 représente un exemple de comparaison des valeurs déduites et des valeurs réelles des efforts s'exerçant dans la bande de roulement. La courbe 15 représente la variation au cour du temps (t) de la composante Fy réelle des efforts imposés par une machine de test selon un plan d'expérience. La courbe 16 représente la variation correspondante de la composante Fy déduite directement selon la méthode de l'invention à partir de la déformation angulaire circonférentielle mesurée aux points C, D, et E d'un flanc unique d'un pneumatique. Les fonctions de transfert ont été déterminées expérimentalement selon la méthode décrite précédemment. On visualise bien la précision obtenue puisque les deux courbes (15, 16) sont pratiquement superposées à tout instant.

Naturellement, bien d'autres variables (en plus des mesures de déformation angulaire circonférentielle δC, δD et δE) peuvent être prises en compte selon le même principe pour améliorer l'efficacité de cette détermination (par exemple, la pression ou la température du pneumatique).

De manière générale, le nombre de points de mesure peut être plus important que les configurations minimales présentées dans les exemples et permettre un résultat plus précis (par l'emploi de valeurs moyennes ou pondérées) ou plus sûr (par vérification de vraisemblance) du fait de la redondance des informations disponibles. De plus, un tel dispositif permettrait un fonctionnement satisfaisant en cas de dégradation partielle des moyens de mesure. Dans ce but, des mesures supplémentaires peuvent également être effectuées en des points d'azimuts différents de ceux présentés ou pour les mêmes points mais dans le flanc opposé.

En dehors de la déformation angulaire circonférentielle, les efforts exercés dans l'aire de contact provoquent bien sûr d'autres types de déformations du pneumatique. Parmi ceux-ci, on peut citer l'extension de la bande de roulement ou le déport transversal de la bande de roulement par rapport aux talons. La mesure de ces déformations peut permettre d'améliorer la précision et/ou la fiabilité de la détermination des composantes des efforts en combinant ces mesures avec celles de la déformation angulaire circonférentielle. Le déport transversal est principalement lié à la composante Fy des efforts. Ainsi, la combinaison de cette mesure (ou d'une mesure liée au déport) avec celle de la déformation angulaire circonférentielle permet une détermination encore plus précise des différentes composantes et en particulier de la composante transversale Fy. La mesure d'autres types de déformations du pneumatique peut également permettre de limiter le nombre de points de mesure de déformation angulaire circonférentielle pour une précision et/ou une fiabilité équivalente. Un critère déterminant de l'intérêt de ces mesures supplémentaires ou alternatives est naturellement la complexité du dispositif de mesure.

Les mesures de la déformation angulaire circonférentielle des flancs peuvent se faire de n'importe quelle manière. On peut, par exemple, mesurer un déphasage entre un signal lié à un point proche de l'épaule et un signal similaire lié à un point proche du talon du pneumatique. Ce signal peut être, par exemple, optique ou magnétique comme décrit dans le brevet US5913240. Le dispositif décrit dans ce brevet permet la mesure simultanée de la déformation angulaire circonférentielle et du déport transversal de la bande de roulement par un moyen unique. En effet, le signal émis par les capteurs permet de déterminer le déphasage (donc la déformation angulaire circonférentielle) alors que l'amplitude du signal des mêmes capteurs est une image de la proximité du flanc (donc du déport transversal).

D'une façon générale, on entend ici par pneumatique, tous types de bandages élastiques, pneumatiques ou non pneumatiques, soumis à une pression interne ou non.

Comme il a été exposé plus haut, la méthode de l'invention vise essentiellement à déterminer de façon simple et fiable les efforts transversaux (Fy) et permet également de calculer les autres composantes (Fx et Fz) dans le cas où ce serait nécessaire. Ainsi, sur un véhicule, si l'on procède à ces mesures pour chaque roue, on peut connaître le bilan global des efforts agissant sur le véhicule, donc les accélérations qu'il subit. Ces informations sont utiles à certains systèmes de gestion de trajectoire ou de comportement comme l'ESP (voir plus haut).

## Revendications

1. Méthode de détermination d'une composante transversale (Fy) d'une résultante d'efforts exercés par la chaussée (3) sur une aire de contact (2) d'un pneumatique (1), ladite méthode étant **caractérisée en ce que** ladite composante transversale (Fy) est déduite d'au moins une mesure de déformation angulaire circonférentielle ($\delta f(B)$) d'au moins un premier flanc (4) du pneumatique (1) en au moins un premier point (B) fixe dans l'espace, situé à un azimut ($\varphi$), le long de la circonférence du pneumatique (1), différent de l'azimut du centre de ladite aire de contact (2) et différent de l'azimut du point opposé audit centre de l'aire de contact (2).

2. Méthode selon la revendication 1 **caractérisée en ce que** l'on effectue une telle mesure respectivement dans chaque flanc (4, 4') dudit pneumatique pour obtenir une première mesure ($\delta f(B)$) et une deuxième mesure ($\delta a(B)$) et l'on déduit ladite composante transversale (Fy) de la différence entre lesdites première et deuxième mesure.

3. Méthode selon la revendication 2 **caractérisée en ce que** l'on effectue, en outre, une telle mesure dans ledit premier flanc (4) en un deuxième point (C) fixe dans l'espace, distinct du premier point (B), situé à un azimut sensiblement opposé ($-\varphi$) du premier point (B) pour obtenir une troisième mesure ($\delta f(C)$) et que l'on déduit, en outre, une composante longitudinale (Fx) de ladite résultante d'efforts exercés par la chaussée (3) de la somme desdites première et troisième mesure.

4. Méthode selon la revendication 3 **caractérisée en ce que** l'on déduit en outre, une composante verticale (Fz) d'une résultante d'efforts exercés par la chaussée (3) de la différence entre lesdites troisième et première mesure et d'une contribution ($\gamma f$) de ladite composante transversale (Fy).

5. Méthode selon l'une des revendications précédentes **caractérisée en ce que** l'azimut ($\varphi$) du premier point (B) est sensiblement égal à 90°.

6. Méthode selon la revendication 1, **caractérisé en ce que** l'on déduit, en outre, une composante longitudinale (Fx) et une composante verticale (Fz) de ladite résultante d'efforts exercés par la chaussée à partir de mesures de déformation angulaire circonférentielle d'au moins un flanc (4) du pneumatique (1) en au moins trois points distincts (C, D, E) fixes dans l'espace le long de la circonférence du pneumatique.

7. Méthode selon la revendication 6, **caractérisé en ce que** l'on déduit lesdites composantes des efforts à partir de mesures de déformation angulaire circonférentielle d'un flanc (4) unique dudit pneumatique.

8. Méthode selon l'une des revendications précédentes **caractérisée en ce que** l'on combine une mesure liée au déport transversal de la bande de roulement à ladite au moins une mesure de déformation angulaire circonférentielle.

**Claims**

1.  A method for determining a transverse component (Fy) of a resultant of forces exerted through the roadway (3) on a contact area (2) of a tyre (1), said method being **characterised in that** said transverse component (Fy) is deduced from at least one measurement of the angular circumferential deformation (δf(B)) in at least one first side wall (4) of the tyre (1) at at least a first fixed point (B) in space which is located at an azimuth (φ) along the circumference of the tyre (1) which differs from the azimuth of the centre of the said area of contact (2) and differs from the azimuth of the point opposite the said centre of the area of contact (2).

2.  A method according to Claim 1, **characterised in that** a measurement of this type is performed respectively in each side wall (4, 4') of said tyre to obtain a first measurement (δf(B)) and a second measurement (δa(B)) and said transverse component (Fy) is deduced from the difference between said first and second measurements.

3.  A method according to Claim 2, **characterised in that** there is furthermore performed a measurement of this type in said first side wall (4) at a second fixed point (C) in space which is distinct from the first point (B) and located at an azimuth (-φ) substantially opposite the first point (B) in order to obtain a third measurement (δf(C)), and **in that** a longitudinal component (Fx) of said resultant of forces exerted through the roadway (3) is furthermore deduced from the sum of said first and third measurements.

4.  A method according to Claim 3, **characterised in that** a vertical component (Fz) of a resultant of forces exerted through the roadway (3) is furthermore deduced from the difference between said third and first measurements and a contribution (γf) of the said transverse component (Fy).

5.  A method according to one of the preceding claims, **characterised in that** the azimuth (φ) of the first point (B) is substantially equal to 90°.

6.  A method according to Claim 1, **characterised in that** a longitudinal component (Fx) and a vertical component (Fz) of said resultant of forces exerted through the roadway are furthermore deduced from measurements of the angular circumferential deformation of at least one side wall (4) of the tyre (1) at at least three distinct points (C, D, E) fixed in space along the circumference of the tyre.

7.  A method according to Claim 6, **characterised in that** the said components of the forces are deduced from measurements of the angular circumferential deformation of a single side wall (4) of the said tyre.

8.  A method according to one of the preceding claims, **characterised in that** a measurement linked to the transverse offset of the tread is combined with the said at least one measurement of the angular circumferential deformation.

**Patentansprüche**

1.  Verfahren zur Bestimmung einer Querkomponente (Fy) einer Resultierenden von durch die Fahrbahn (3) auf eine Kontaktfläche (2) eines Luftreifens (1) ausgeübten Kräften, wobei das Verfahren **dadurch gekennzeichnet ist, dass** die Querkomponente (Fy) von mindestens einem Umfangs-Winkelverformungsmesswert (δf(B)) mindestens einer ersten Flanke (4) des Luftreifens (1) an mindestens einem ersten raumfesten Punkt (B) abgeleitet wird, der sich in einem Azimut (φ) entlang des Umfangs des Luftreifens (1) befindet, welcher sich vom Azimut der Mitte der Kontaktfläche (2) und vom Azimut des der Mitte der Kontaktfläche (2) entgegengesetzten Punkts unterscheidet.

2.  Verfahren nach Anspruch 1, **dadurch gekennzeichnet, dass** eine solche Messung in jeder Flanke (4, 4') des Luftreifens durchgeführt wird, um einen ersten Messwert (δf(B)) und einen zweiten Messwert (δa(B)) zu erhalten, und die Querkomponente (Fy) von der Differenz zwischen dem ersten und dem zweiten Messwert abgeleitet wird.

3.  Verfahren nach Anspruch 2, **dadurch gekennzeichnet, dass** außerdem eine solche Messung in der ersten Flanke (4) an einem zweiten raumfesten Punkt (C) anders als der erste Punkt (B) durchgeführt wird, der sich in einem Azimut im Wesentlichen entgegengesetzt (-φ) zum ersten Punkt (B) befindet, um einen dritten Messwert (δf(C)) zu erhalten, und dass außerdem eine Längskomponente (Fx) der Resultierenden von durch die Fahrbahn (3) ausgeübten Kräften von der Summe des ersten und des dritten Messwerts abgeleitet wird.

4.  Verfahren nach Anspruch 3, **dadurch gekennzeichnet, dass** außerdem eine Vertikalkomponente (Fz) einer Resultierenden von durch die Fahrbahn ausgeübten Kräften (3) von der Differenz zwischen dem ersten und dem dritten Messwert und von einem Beitrag (γf) der Querkomponente (Fy) abgeleitet wird.

5. Verfahren nach einem der vorhergehenden Ansprüche, **dadurch gekennzeichnet, dass** der Azimut (φ) des ersten Punkts (B) im Wesentlichen gleich 90° ist.

6. Verfahren nach Anspruch 1, **dadurch gekennzeichnet, dass** außerdem eine Längskomponente (Fx) und eine Vertikalkomponente (Fz) der Resultierenden von durch die Fahrbahn ausgeübten Kräften ausgehend von Umfangs-Winkelverformungsmesswerten mindestens einer Flanke (4) des Luftreifens (1) an mindestens drei unterschiedlichen raumfesten Punkten (C, D, E) entlang des Umfangs des Luftreifens abgeleitet werden.

7. Verfahren nach Anspruch 6, **dadurch gekennzeichnet, dass** die Komponenten der Kräfte ausgehend von Umfangs-Winkelverformungsmesswerten einer einzigen Flanke (4) des Luftreifens abgeleitet werden.

8. Verfahren nach einem der vorhergehenden Ansprüche, **dadurch gekennzeichnet, dass** ein mit dem Querversatz der Lauffläche verbundener Messwert mit dem mindestens einen Umfangs-Winkelverformungsmesswert kombiniert wird.

**Fig 1**

**Fig 2**

**Fig 3a**

**Fig 3b**

Fig 4

**Fig 5**

EP 1 290 421 B1

**EP 1 290 421 B1**

**Documents brevets cités dans la description**

- US 5913240 A